# EUROPÄISCHE PATENTSCHRIFT

(11) **EP 2 464 897 B1**
(45) Veröffentlichungstag und Bekanntmachung des Hinweises auf die Patenterteilung: **10.09.2014**
(21) Anmeldenummer: 10736667.6
(22) Anmeldetag: 19.07.2010
(51) Int. Cl.: F16H 25/24, F16D 65/18

(54) **KUGELGEWINDETRIEB MIT AXIAL ABGESTÜTZTER GEWINDESPINDEL**
BALL SCREW DRIVE HAVING AN AXIALLY SUPPORTED THREADED SPINDLE
VIS À BILLES COMPRENANT UNE TIGE FILETÉE À SUPPORT AXIAL

(30) Priorität: 10.08.2009 DE 102009036884
(43) Veröffentlichungstag der Anmeldung: 20.06.2012
(73) Patentinhaber: Schaeffler Technologies GmbH & Co. KG, 91074 Herzogenaurach (DE)
(72) Erfinder: OSTERLÄNGER, Jürgen, 91448 Emskirchen (DE); MIKO, Josef, Rochester Hills, MI 48306 (US); KRAUS, Manfred, 91074 Herzogenaurach (DE); BÄRTHLEIN, Stefanie, 91460 Baudenbach (DE)
(86) Internationale Anmeldenummer: PCT/EP2010/060443
(87) Internationale Veröffentlichungsnummer: WO 2011/018304

(56) Entgegenhaltungen:
- EP-B1- 1 058 795
- WO-A1-99/45292
- WO-A1-03/076831
- DE-A1- 4 142 983

## Beschreibung

### Gebiet der Erfindung

Die vorliegende Erfindung betrifft einen Kugelgewindetrieb. Kugelgewindetriebe wandeln rotatorische Bewegungen in translatorische Bewegungen um. Die vorliegende Erfindung betrifft insbesondere auch eine Betätigungseinrichtung zur Betätigung einer Bremse, insbesondere Feststellbremse für ein Kraftfahrzeug.

### Hintergrund der Erfindung

Aus der gattungsbildenden EP 1058795 B1 beispielsweise ist eine Betätigungseinrichtung für eine Feststellbremse eines Kraftfahrzeuges bekannt geworden, bei der ein Kugelgewindetrieb vorgesehen ist.

Die von einem Elektromotor angetriebene, aus mehreren Spindelteilen zusammengesetzte Gewindespindel bewirkt eine relative Axialverschiebung zwischen der Gewindemutter und der Gewindespindel, wobei die Gewindemutter in ihrer Vorschubrichtung eine Druckkraft auf einen Reibbelag einer Scheibenbremse ausübt. Diese Druckkraft wird über ein gehäuseseitiges Axiallager aufgefangen, an dem die Gewindespindel abgestützt ist. Aufgrund der ausgeübten axialen Druckkräfte können in dem Gehäuse elastische Verformungen auftreten, die ein Verkippen zwischen der Gewindespindel und der Gewindemutter oder ein Verkippen zwischen der Gewindespindel und dem Axiallager hervorrufen können. Ein derartiges Verkippen kann die Funktionalität des Kugelgewindetriebes beeinträchtigen.

### Zusammenfassung der Erfindung

Aufgabe der vorliegenden Erfindung war es, einen Kugelgewindetrieb anzugeben, dessen Funktionalität auch unter hohen Belastungen gewährleistet ist. Erfindungsgemäß wird diese Aufgabe durch den Kugelgewindetrieb gemäß Anspruch 1 gelöst. Dadurch, dass die Gewindespindel mit ihrer ersten, mit einem Krümmungsradius konvex ausgebildeten Lagerfläche an einer vorzugsweise konisch ausgebildeten zweiten Lagerfläche des Axiallagers abgestützt ist, wobei die erste Lagerfläche und die zweite Lagerfläche entlang einer vorzugsweise ringförmigen Kontaktbahn einander berühren, und wobei ferner ein aus dem Verhältnis des Krümmungsradius zu dem Radius der ringförmigen Kontaktbahn gebildeter Quotient Werte zwischen 1,2 und 2,4 einschließlich dieser Werte darstellt, ist eine einwandfreie Funktionalität des Kugelgewindetriebes gegeben.

Ein Kreismittelpunkt mit diesem Krümmungsradius der ersten Lagerfläche sollte in axialer Richtung möglichst nahe dem Kreismittelpunkt der ringförmigen Kontaktbahn liegen, um ein möglichst leichtes Verkippen zu ermöglichen. Wenn jedoch - was erfindungsgemäß bevorzugt ist - diese beiden Kreismittelpunkte auf der Spindelachse liegen, sollte ein Mindestabstand zwischen diesen beiden Kreismittelpunkten eingehalten werden; denn je geringer der Abstand ist, desto weniger Flächenanteil zur Übertragung axialer Kräfte steht zur Verfügung; je größer dieser Abstand wird, desto größer wird auch der Flächenanteil für die Übertragung von axialen Kräften. Allerdings steht dieser Vorteil der Nachteil einer reduzierten Kippbeweglichkeit gegenüber. Ferner ist aus konstruktiven Gründen ein Mindestradius für die Kontaktbahn erforderlich, wenn die Gewindespindel durch das Axiallager hindurchgeführt ist; in diesem Fall muß der Radius der Kontaktbahn größer sein als der Radius des hindurchgeführten Spindelabschnitts.

Die Erfindung hat erkannt, dass unter Berücksichtung von konstruktiven Erwägungen die technischen Probleme im Zusammenhang mit den erwähnten Biegemomenten die erfindungsgemäß vorgesehenen Verhältnisse von dem Krümmungsradius zu dem Radius der Kontaktbahn die geschilderten Nachteile beseitigt.

Die erfindungsgemäße Ausbildung der beiden Lagerfläche ermöglicht ein Verkippen zwischen der Gewindespindel und dem Axiallager, ohne dass ein Verschleiß förderndes Verkanten oder eine umlaufende Punktlast im Bereich des Axiallagers auftreten würde. Eine umlaufende Punktlast wäre gegeben, wenn unter einer Verformung an dem Gehäuse kein Verkippen zugelassen würde. Dann würde ein in das Axiallager eingeleitetes Biegemoment zwar statisch wirken; aufgrund der rotierenden Spindel mit dem ebenfalls rotierenden Axiallager würde dann mit jeder Umdrehung einmal die Stelle des eingeleiteten Biegemomentes passieren, so dass bezogen auf das Axiallager eine umlaufende Punktlast gegeben wäre. Die Erfindung vermeidet diesen Nachteil: denn aufgrund der erfindungsgemäßen Ausbildung der ersten und zweiten Lagerfläche des Axiallagers ist ein Verkippen zwischen der ersten und der zweiten Lagerfläche ermöglicht, so dass während einer Umdrehung eine Taumelbewegung zwischen der ersten und der zweiten Lagerfläche erfolgt, ohne dass unerwünschte Biegemomente in das Axiallager eingeleitet werden.

Bei der bevorzugten konischen Ausbildung der zweiten Lagerfläche stellt sich problemlos eine ringförmige Kontaktbahn zwischen den beiden Lagerflächen ein, wobei unter einem leichten Verkippen der Gewindespindel gegenüber dem Gehäuse die Kontaktbahn leicht auswandern und von ihrer idealen Kreisbahn abweichen kann. Die Erfindung vermeidet unter einem Verkippen die Übertragung von Biegemomenten in das Axiallager. Diese Kontaktbahn ist auch die Linie der größten Pressung, die nach der Methode der Hertzschen Pressung ermittelt werden kann. Ohne Verkippung hat diese Kontaktbahn eine einwandfreie Kreisform.

Bei erfindungsgemäßen Weiterbildungen kann die Gewindespindel einteilig oder auch mehrteilig ausgebildet sein, wobei die Gewindespindel einen radial verjüngten Spindelabschnitt aufweisen kann, der für den Antrieb durch einen Motor ausgebildet sein kann. Im Übergang von dem radial vergrößerten, mit der Gewindemutter zusammenarbeitenden Spindelabschnitt auf den verjüngten Spindelabschnitt kann eine Schulter ausgebildet sein, an der die erste konvexe Lagerfläche ausgebildet ist.

Im Längsschnitt durch die Gewindespindel gesehen ist die erste Lagerfläche unter einem Krümmungsradius konvex gewölbt. Diese konvexe Wölbung ist bei erfindungsgemäßen Kugelgewindetrieben demzufolge im Längsschnitt durch den Kugelgewindetrieb erkennbar. Vorzugsweise liegt der Kreismittelpunkt mit dem Krümmungsradius der ersten Lagerfläche auf der Spindelachse der Gewindespindel. Auf dieser Spindelachse liegt ebenfalls der Kreismittelpunkt der ringförmigen Kontaktbahn. Die beiden Mittelpunkte sind jedoch axial beabstandet voneinander. Die Kontaktbahn und ihr Mittelpunkt liegen auf einer quer zur Spindelachse angeordneten Ebene.

Erfindungsgemäß ist der Quotient aus dem Verhältnis des Krümmungsradius der ersten Lagerfläche zu dem Radius der Kontaktbahn zwischen den Werten 1,2 und 2,4 einschließlich dieser Werte angegeben. Innerhalb dieser Werte können die erwähnten Kippbewegungen ohne Beeinträchtigung der Funktionalität des Gewindetriebes ermöglicht werden. Die erfindungsgemäßen Werte beziehen sich auf die lastfreie Ausgangssituation, in der zwar ein Kontakt zwischen der ersten und der zweiten Lagerfläche entlang der Kontaktbahn hergestellt ist, jedoch kein Verkippen und keine nennenswerte axiale Belastung vorliegen.

Beide Lagerflächen drehen mit der angetriebenen Gewindespindel.

Es hat sich herausgestellt, dass erfindungsgemäße Kugelgewindetriebe besonders geeignet sind als Betätigungseinrichtung in einer Bremse eines Kraftfahrzeuges, insbesondere bei so genannten Feststellbremsen oder Parkbremsen. Bei derartigen Anordnungen können infolge hoher Anpresskräfte elastische Verformungen im Bereich der Bremszange auftreten, mit der Folge, dass ein Verkippen zwischen der Gewindespindel und der Gewindemutter, oder ein Verkippen zwischen der Gewindespindel und dem gehäuseseitig abgestützten Axiallager auftreten kann. Dieser Kippwinkel kann etwa 0,5° betragen. Es wurde herausgefunden, dass für einen derartigen Kippwinkel die erste konvexe Lagerfläche und die zweite, vorzugsweise konisch ausgebildete Lagerfläche so ausgebildet sind, dass der Quotient aus dem Verhältnis von dem Krümmungsradius zu dem Radius der Kontaktbahn zwischen den Werten 1,4 und 1,6, einschließlich dieser Werte annimmt. Hier erfolgt ein Verkippen ohne Einbringung von Biegemomenten in das Axiallager. Der Radius der Kontaktbahn beträgt etwa zwischen 7mm und 10 mm.

Werden erfindungsgemäße Kugelgewindetriebe bei der weiter oben erwähnten Parkbremse eingesetzt, können bei aktivierter Bremse im Axiallager erhebliche Druckkräfte übertragen werden. Damit auch unter hohen axialen Druckkräften das Verkippen infolge elastischer Verformung am Gehäuse ermöglicht ist, sieht eine erfindungsgemäße Weiterbildung vor, dass wenigstens eine der beiden ersten und zweiten Lagerflächen mit Vertiefungen zur Aufnahme von Schmiermittel versehen ist. Bei derartigen erfindungsgemäßen Weiterbildungen besteht demzufolge ein Schmierfilm entlang der Kontaktbahn, so dass ein Verkippen möglich ist.

Das Axiallager kann eine mit der Gewindespindel in den Drehrichtungen formschlüssig verbundene Stützscheibe aufweisen, an deren der Gewindemutter zugewandten Seite die zweite Lagerfläche ausgebildet ist. Diese Stützscheibe ist vorzugsweise taumelfähig auf der Gewindespindel angeordnet, um das beschriebene Verkippen zwischen dem Axiallager und der Gewindespindel zu ermöglichen, ohne dass unerwünschte Momente in das Axiallager eingeleitet werden. Diese Stützscheibe kann dann an der von der Gewindemutter abgewandten Seite mit einer Axiallagerfläche versehen sein, die entweder unmittelbar an der Stützscheibe oder aber an einer an die Stützscheibe anschließenden Lagerscheibe ausgebildet ist. Auf diese Weise ist die Gewindespindel gegenüber einem Gehäuse drehbar, jedoch in axialer Richtung an diesem Gehäuse abgestützt.

Als problematisch hat sich demzufolge bei Bremsvorrichtungen erwiesen, dass es infolge der beachtlichen Betätigungskräfte beim Andrücken der Bremsbeläge gegen die Bremsscheibe zu einem Verbiegen der Bremszange kommt. Diese biegt sich "auf", das heißt, dass sich quasi der Kugelgewindetrieb, der an der Bremszange fest montiert ist, gegen die Bremsscheibe abstützt und bei hinreichend hoher axialer Andruckkraft die Bremszange aufbiegt. Hieraus resultiert ein Achsversatz samt Winkelfehler von Mutter zur Spindel und etwaigen Axial- und Radiallagern. Dies führt zu einer stark ungleichen Lastverteilung in den Lagern, über die der Kugelgewindetrieb an der Bremszange drehgelagert ist, was zu einem vorzeitigen Ausfall führen kann.

Erfindungsgemäße Weiterbildungen bei Betätigungseinrichtungen für Feststellbremsen können vorsehen, dass die Gewindemutter mit einem den Bremsbelag aufweisenden Kolben verbunden ist, der relativ zur Gewindemutter kippbar an der Gewindemutter aufgelagert ist, und/oder dass die Gewindespindel relativ zur Bremszange kippbar an der Bremszange gelagert ist.

Bei dieser Feststellbremse ist eine gewisse Relativbeweglichkeit verschiedener beim Bremsen infolge des Betriebs des Kugelwindetriebs belasteter Bauteile gegeben, welche Beweglichkeit eine Veränderung der Relativposition der Bauteile zueinander ermöglicht, worüber ein etwaiger Achsversatz respektive eine Lägerlast zumindest teilweise kompensiert werden kann. So ist nach einer Erfindungsalternative vorgesehen, dass die Gewindemutter mit einem Kolben verbunden ist bzw. dieser Kolben direkt an der Gewindemutter aufgelagert ist, jedoch nicht starr, sondern derart, dass er um die Spindellängsachse (die mit der Mutternlängsachse zusammenfällt) kippbar ist. Das heißt, dass der Kolben relativ zur Gewindemutter in jede Richtung etwas kippen oder schwenken kann. Dies führt dazu, dass beim Aufspreizen der Bremszange zwar die Spindel- und damit auch die Mutternachse ebenfalls etwas verkippt wird, sich jedoch diese Verkippung nicht unmittelbar auch auf den gekoppelten Kolben auswirkt. Vielmehr kann dieser relativ zur Mutter leicht verkippen, woraus eine Lastkompensation in diesem Bereich erreicht wird. Es ist hier also ein bewegliches System realisiert.

Diese Kippbeweglichkeit der Gewindemutter kann zusätzlich zu der beschriebenen erfindungsgemäßen Kippbeweglichkeit im Axiallager vorgesehen werden.

Spreizt sich nun die Bremszange auf, so kann die Zangenverbiegung infolge eines zumindest teilweisen Ausgleichs der Lageänderung durch leichtes Verkippen der Spindel in der beweglichen Lagerung an der Bremszange kompensiert werden. Das heißt, dass auch in diesem Bereich eine kompensierende Bewegungsmöglichkeit realisiert ist, die zur Entlastung der Lagerung führt.

In Weiterbildung der Erfindung kann bei einer Kipplagerung des Kolbens an der Mutter vorgesehen sein, dass zu deren Realisierung an der Mutter eine erste konische Führungsfläche und am Kolben eine zweite konische Führungsfläche vorgesehen ist, die aneinander anliegen, wobei wenigstens eine Führungsfläche ballig ist. Die Mutter und der Kolben berühren einander nur im Bereich der Führungsflächen, die beide dem Grunde nach konisch sind, so dass eine Zentrierung gegeben ist. Zumindest eine der Führungsflächen weist jedoch eine leichte Balligkeit auf, die es ermöglicht, dass der Kolben relativ zur Mutter leicht (im Betrieb beispielsweise um 0,5° oder weniger) verkippt. Auch ist es denkbar, beide Führungsflächen ballig zu gestalten. Der Kolben selbst ist zweckmäßigerweise hohlzylindrisch, wobei die Gewindespindel in dem Kolben, vorzugsweise über die gesamte Länge ihres Gewindeabschnitts, aufgenommen ist. Dies führt zu einem weitgehend geschlossenen System, die Mutter ist folglich im Kolben quasi gekapselt.

### Kurze Beschreibung der Zeichnung

Zwei Ausführungsbeispiele der Erfindung sind in den Zeichnungen dargestellt und werden im Folgenden näher beschrieben. Es zeigen:
- Fig. 1: eine Prinzipdarstellung einer Bremseinrichtung mit einem erfindungsgemäßen Kugelgewindetrieb in unbelastetem Zustand im Schnitt,
- Fig. 2: eine vergrößerte Detailansicht des Bereichs II aus Fig. 1,
- Fig. 3: eine vergrößerte Detailansicht des Bereichs II aus Fig. 1, und
- Fig. 4: die Bremseinrichtung aus Fig. 1 in belastetem Zustand mit relativ zueinander verkippten Elementen,
- Fig. 5: eine weitere Bremseinrichtung mit einem erfindungsgemäßen Kugelgewindetrieb im Schnitt,
- Fig. 6: den Kugelgewindetrieb aus Fig. 5 und
- Fig. 7: eine Ausschnittvergrößerung aus Figur 6,
- Fig. 8: Einzelteile des Kugelgewindetriebes aus Figur 6,
- Fig. 9: ein weiteres Einzelteil des Kugelgewindetriebes aus Figur 6
- Fig. 10: den erfindungsgemäßen Kugelgewindetrieb in teilweise gebrochener Darstellung, und
- Fig. 11: den erfindungsgemäßen Kugelgewindetrieb aus Figur 10 im Querschnitt entlang der Schnittlinie XI-XI.

### Ausführliche Beschreibung der Zeichnung

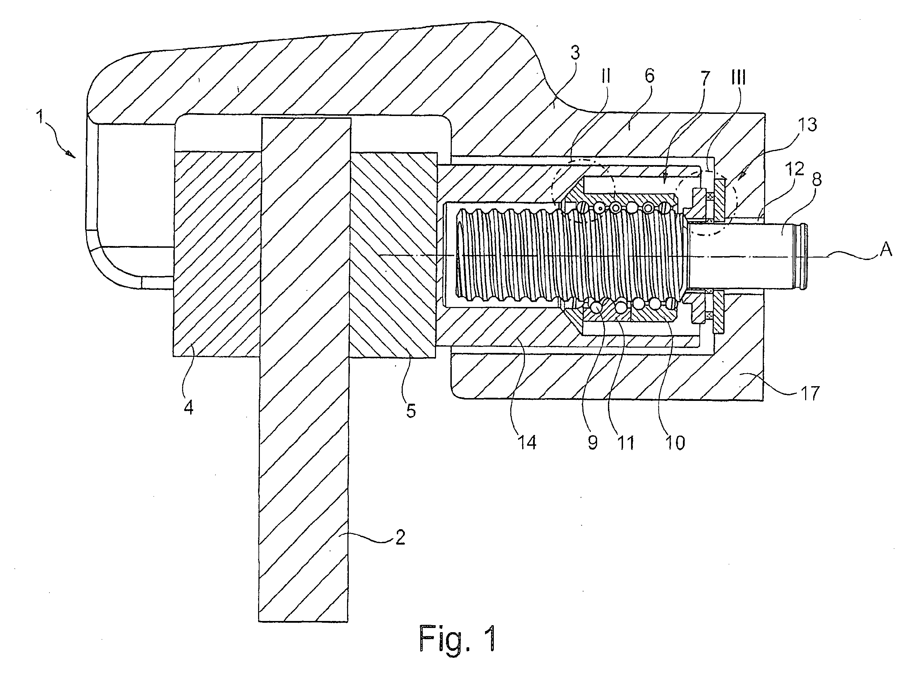

Fig. 1 zeigt eine erfindungsgemäße Bremseinrichtung 1, wie sie beispielsweise in einem Kraftfahrzeug als Parkbremse oder Feststellbremse realisiert sein kann. Die Bremseinrichtung 1 umfasst eine Bremsscheibe 2, die in bekannter Weise mit dem Rad verbunden ist, sowie eine die Bremsscheibe 2 übergreifende, im Querschnitt im Wesentlichen C-förmige Bremszange 3. In dieser sind zwei Bremsbeläge 4, 5 aufgenommen, die beidseits der zwischen ihnen angeordneten Bremsscheibe 2 positioniert sind und zum Bremsen fest an dieser anliegen, die Bremsscheibe dann zwischen sich verklemmend. Fig. 1 zeigt die Lösestellung, wenn die Bremsscheibe 2 also nicht verspannt ist, die Bremsscheibe 2 kann frei zwischen den beiden Bremsbelägen 4, 5 drehen, wenngleich diese eher aus Gründen der Darstellung direkt an der Bremsscheibe anliegen. Tatsächlich ist zwischen der Bremsscheibe 2 und den Bremsbelägen 4, 5 ein minimaler Spalt gegeben, der in der Lösestellung die freie Drehbarkeit ermöglicht.

Fig. 1 zeigt ferner einen in einem gegebenenfalls gehäuseartigen Abschnitt 6 der Bremszange 3 aufgenommenen erfindungsgemäßen Kugelgewindetrieb 7, bestehend aus einer Gewindespindel 8, auf der über Kugeln 9 geführt eine Gewindemutter 10 läuft, wobei die Kugeln 9 endlos umlaufen und über wenigstens ein Kugelrückführelement 11 stets zurückgesetzt werden. Die Spindel 8 ist mit einem hier nicht näher gezeigten Antriebsmotor, der bevorzugt im Bereich der Außenseite des gehäuseartigen Abschnitts 6 angeordnet ist und unter einem Winkel von z. B. 90° mit seiner Abtriebswelle zur Gewindespindel 8 steht, verbunden. Seine Abtriebswelle ist mit der Gewindespindel 8 über eine kardanische Verbindung gekoppelt, die den motorischen Antrieb der Gewindespindel 8 ermöglicht. Die Gewindespindel 8 ist ferner an der Bremszange 3 über ein Radiallager 12 sowie ein Axiallager 13 hier in Form eines Nadellagers lagefest drehgelagert.

Die Gewindemutter 10 ihrerseits ist mit einem Kolben 14 gekoppelt, dieser liegt an der vorderen Stirnkante der Gewindemutter 10 auf, ist dort also abgestützt. Am Kolben 14 ist der bewegliche Bremsbelag 5 angeordnet. Wird nun durch Betätigen eines geeigneten fahrzeugseitigen Betätigungselements der nicht näher gezeigte Antriebsmotor angesteuert, um die Bremseinrichtung zu betätigen, mithin also die Bremsscheibe 2 zu fixieren, so dreht über den Antriebsmotor bewegt die Gewindespindel 8, was dazu führt, dass die Gewindemutter 10 längs der Gewindespindel 8, über die Kugeln 9 geführt, wandert, sich ausgehend von Fig. 1 also nach links bewegt. Hierbei wird der auf der Stirnfläche der Gewindemutter 10 aufgelagerte Kolben 14 und mit ihm der Bremsbelag 5 nach links gedrückt, so dass er in feste Anlage gegen die am anderen Bremsbelag 4 gegengelagerte Bremsscheibe gedrückt wird, worüber diese zwischen beiden Bremsbelägen 4, 5 fixiert wird.

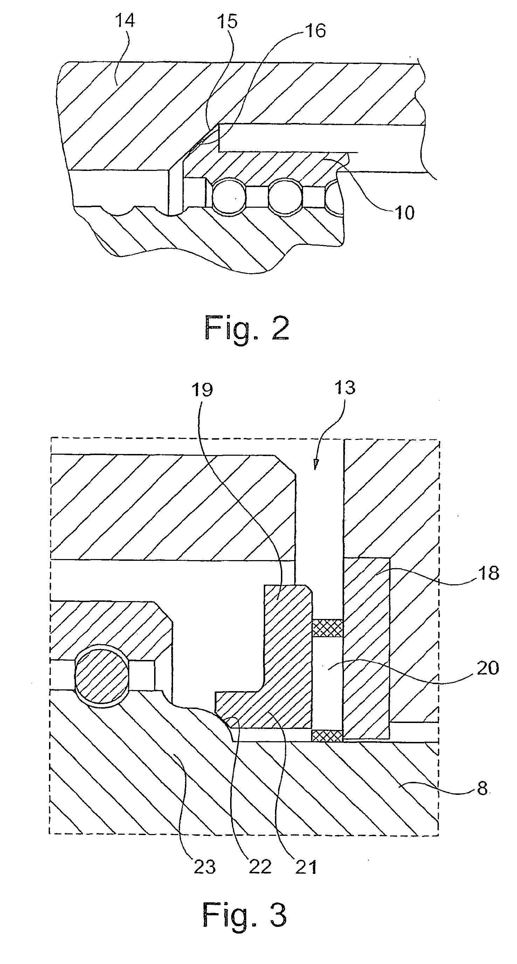

Fig. 2 zeigt in vergrößerter Darstellung eine Teilansicht aus dem Auflagerbereich des Kolbens 14 auf der Gewindemutter 10. Der Kolben 14 weist eine konische Führungsfläche 15 auf, der eine der Grundform nach ebenfalls konische zweite Führungsfläche 16 an der Stirnseite der Gewindemutter 10 gegenüberliegt, die jedoch eine ballige oder konvexe Außenform aufweist. Das heißt, dass hier keine flächige Anlage gegeben ist, sondern nur eine linienförmige Auflage der Führungsfläche 15 auf der Führungsfläche 16. Dies bewirkt, dass der Kolben 14 auf der Mutter 10 beweglich aufsitzt, das heißt, dass sich die Führungsfläche 15 auf der Führungsfläche 16 infolge der linienförmigen Lagerung bewegen kann. Der Kolben 14 kann also relativ zur Gewindemutter 10 verkippen, es ist eine über ein geeignetes Schmiermittel zur Reibungsreduzierung geschmierte bewegliche Lagerung realisiert.

Eine ebenfalls bewegliche Lagerung ist, wie Fig. 3 in einer vergrößerten Teilansicht zeigt, im Bereich der Lagerung der Gewindespindel 8 an der Bremszange 3 realisiert. Wie ausgeführt, ist die Gewindespindel 8 einerseits radial über das Radiallager 12 an der Wand 17 der Bremszange gelagert, andererseits über das Axiallager 13. Dieses umfasst eine erste Lagerscheibe 18 (Gehäusescheibe), die lagefest an der Wand 17 angeordnet ist, sowie eine zweite Lagerscheibe 19 (Wellenscheibe), die auf der ersten Lagerscheibe 18 über Nadelwälzkörper 20 läuft. Die Lagerscheibe 19 weist einen axialen Ansatz 21 auf, der eine konische zweite Lagerfläche 22 aufweist, die - ähnliche wie die Führungsfläche 16 bei der Lagerung des Kolben 14 auf der Gewindemutter 10 - eine ballige, konvexe Oberfläche bei vorzugsweise im Wesentlichen konischer Grundform aufweist.

Die Gewindespindel 8 ihrerseits weist eine erste, konvexe Lagerfläche 23 auf. Ersichtlich ist also auch hier eine bewegliche Lagerung realisiert, nachdem auch hier die erste Lagerfläche 23 nur entlang einer Linie, nicht jedoch flächig, auf der zweiten Lagerfläche 22 aufliegt. Dies führt dazu, dass die Gewindespindel 8 etwas relativ zum lagefesten Axiallager 13 bzw. zur lagefesten Lagerscheibe 19, ebenfalls geschmiert, verkippen kann. Diese Verkippung ist dadurch möglich, dass die Gewindespindel 8 im Radiallager 12 ebenfalls mit etwas Spiel aufgenommen ist respektive das Radiallager, beispielsweise ein Kunststoffgleitlager, eine gewisse Verkippung zulässt. Der Verkippungswinkel liegt im Betrieb, wenn es zu der Zangenaufweitung infolge der wirkenden Kräfte kommt, im Bereich von deutlich < 0,5° pro beweglicher Lagerstelle, so dass das Gleitlager 12 nicht nennenswert belastet wird.

Selbstverständlich ist es bei beiden Lagerstellen möglich, die Balligkeit an der jeweils anderen Führungsfläche zu realisieren, oder auch beide Führungsflächen ballig auszugestalten.

Bei der erfindungsgemäßen Bremseinrichtung 1 sind also zwei bewegliche Lagerstellen realisiert, nämlich zum einen im Bereich der Auflagerung des Kolbens 14 auf der Mutter 10, zum anderen im Bereich der Auflagerung der Gewindespindel 8 auf dem Axiallager 13. Dies führt nun dazu, dass eine bei bekannten Bremseinrichtungen gegebene Verkippung der relevanten Achsen, aus der eine hohe Lagerbelastung resultiert, die zu einem vorzeitigen Lagerausfall führen kann, weitgehend kompensiert werden kann, so dass die Lagerlasten deutlich verringert werden können.

In der in Fig. 1 gezeigten unbelasteten Stellung fallen die drei Längsachsen der Gewindespindel 8, der Bremszange 3 respektive des vorzugsweise zylindrischen gehäuseartigen Abschnitts 6 sowie des Kolbens 14 zusammen, sie sind dort mit A als gemeinsame Achse gekennzeichnet.

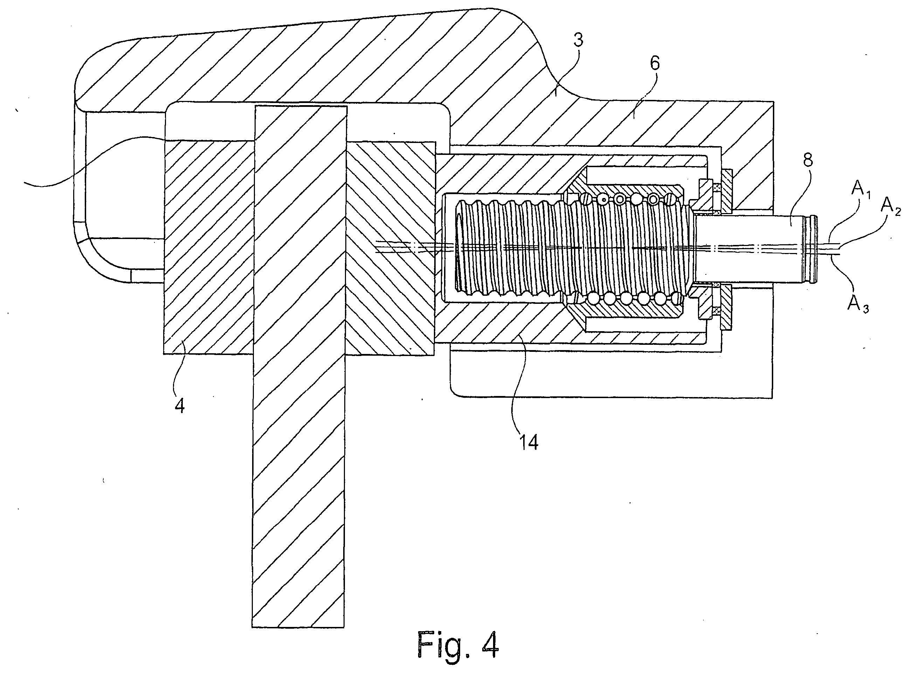

Wird nun über den nicht gezeigten Motor die Gewindespindel 8 angesteuert und über diese der Kolben 14 und mit ihm der Bremsbelag 5 gegen die Bremsscheibe 2 gedrückt, so kommt es je nach Andruckkraft zu einem mehr oder weniger starken Aufweiten oder Aufspreizen der Bremszange 3, wie dies in Fig. 4 gezeigt ist. Ersichtlich weitet sich die Bremszange 3, es bildet sich zum einen ein leichter Spalt 24 im Bereich der Bremszangenanlage am ersten Bremsbelag 4, wie sich auch deutlich eine winklige Stellung des Abschnitts 6 der Bremszange 3 relativ zum Kolben 14 einstellt. An dieser Stelle ist anzumerken, dass Fig. 4 aus Gründen der Darstellbarkeit eine deutlich überzeichnete Aufweitung und Bauteilverkippung zeigt, als real eintritt.

Dieser starke Winkelversatz kann jedoch infolge der realisierten zwei separaten Beweglichkeiten respektive beweglichen Lagerungen quasi aufgespaltet werden und die auf das Axiallager wirkende Last deutlich verringert werden. Denn zum einen führt die Verkippung der Bremszange 3, also ihre Aufspreizung dazu, dass sich der Kolben 14 relativ zur Mutter 10 leicht verkippt, was über die in Fig. 2 näher gezeigte bewegliche Auflagerung des Kolbens 14 auf der Mutter 10 über die Führungsflächen 15, 16 ergibt. In gleicher Weise kommt es zu einer leichten Verkippung der Auflagerung der Gewindespindel 8 auf dem Axiallager 13 respektive der Lagerscheibe 19 infolge der dort realisierten beweglichen Lagerung, wie in Fig. 3 gezeigt. Auch hier kommt es also zu einer wenngleich geringen Relativbewegung oder Kippbewegung. Das heißt, dass sich folglich die Elemente Kolben 14, Gewindemutter 10, Gewindespindel 8, Axiallager 13 respektive Lagerscheibe 19 lastbedingt relativ zueinander paarweise verstellen und es folglich zu einer Aufspaltung und damit gleichzeitig gegebenen lokalen Verringerung der einzelnen Verkippwinkel kommt. Mit der Relativbewegung des Axiallagers 13 zur Gewindespindel 8 kommt es auch dazu, dass sich die Gewindespindel 8 relativ zum Radiallager 12 bewegt bzw. verkippt, wie in Fig. 4 ebenfalls dargestellt ist. Während in Fig. 1 sämtliche Längsachsen wie beschrieben zusammenfallen, ergibt sich nun infolge der Bremszangenaufweitung ein Achsversatz, der jedoch deutlich geringer ist infolge der realisierten Beweglichkeiten, als er dies bei starrer Lagerung wäre. Ersichtlich fallen die einzelnen Achsen A₁ der Bremszange 3, A₂ des Kugelgewindetriebs 7 respektive der Gewindespindel 8 und A₃ des Kolbens 14 nicht mehr zusammen, gleichwohl ist der jeweilige Achsversatz relativ gering. Die im Realbetrieb auftretende maximale Schiefstellung oder Verkippung von etwa 0,5° der Bremszangenachse relativ zur Normalen auf die Bremsscheibe kann durch die erfindungsgemäß vorgesehene Entkopplung der Elemente, also ihrer relativen Beweglichkeit zueinander, gut kompensiert werden, so dass insgesamt entweder der Kugelgewindetrieb etwas kleiner dimensioniert werden kann und/oder die Lagerlebensdauer deutlich ansteigt.

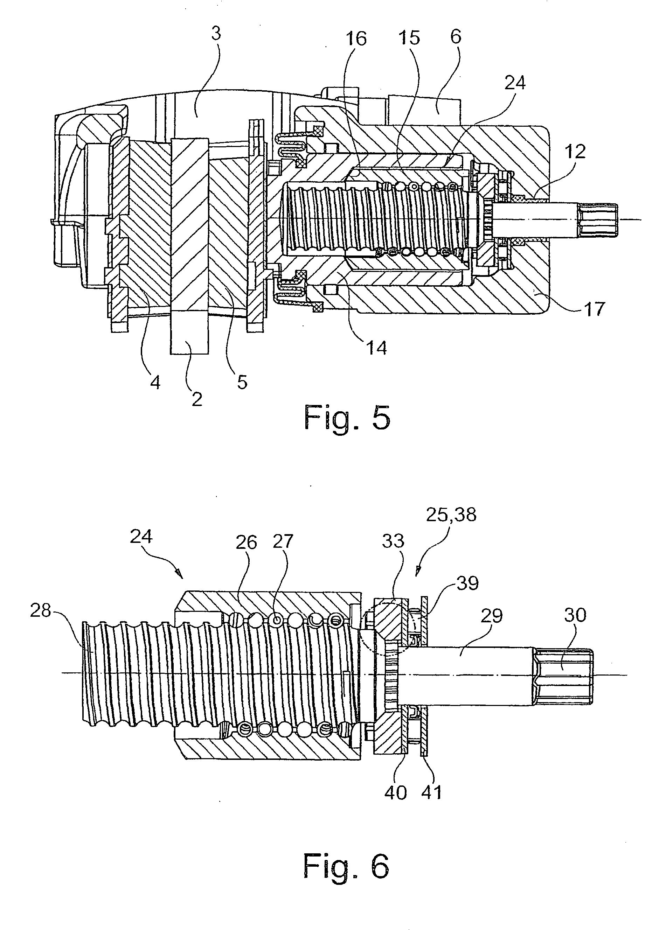

Die Figuren 5 bis 11 zeigen eine weitere Bremseinrichtung mit einem erfindungsgemäßen Kugelgewindetrieb 24. In dieser Anordnung kann die Erfindung auch als Betätigungseinrichtung für eine Feststellbremse bezeichnet werden.

Soweit die hier dargestellten Bauteile mit denen des zuvor beschriebenen Ausführungsbeispieles übereinstimmen, werden die gleichen Bezugszeichen verwendet.

Figur 5 zeigt im Schnitt eine Parkbremse oder Feststellbremse mit dem erfindungsgemäßen Kugelgewindetrieb 24. Hier ist ein gegenüber dem vorangegangenen Ausführungsbeispiel modifiziertes Axiallager 25 vorgesehen.

Der erfindungsgemäße Kugelgewindetrieb 24 mit dem Axiallager 25 ist deutlich in Figur 6 im Schnitt abgebildet. Eine Gewindemutter 26 ist über Kugeln 27 auf einer Gewindespindel 28 in bekannter Weise wälzgelagert. Die Gewindespindel 28 weist außerhalb ihres mit der Gewindemutter 26 zusammenarbeitenden Abschnitts einen radial abgestuften Spindelabschnitt 29 auf, der an seinem axialen Ende mit einem Mehrkant 30 versehen ist. Ein hier nicht abgebildetes Getriebe kann an diesen Mehrkant 30 abtriebsseitig angeschlossen werden.

Der Figur 6 ist ferner zu entnehmen, dass die Gewindespindel 28 mit ihrem Spindelabschnitt 29 durch das Axiallager 25 hindurchgeführt ist. Das Axiallager 25 umfasst eine Stützscheibe 33 sowie ein Axialwälzlager 38, bei dem Rollen 39 zwischen zwei Lagerscheiben 40,41 angeordnet sind. Die eine Lagerscheibe 40 liegt an der Stützscheibe 33 an, die andere Lagerscheibe 41 ist am gehäuseseitigen Abschnitt 6 abgestützt.

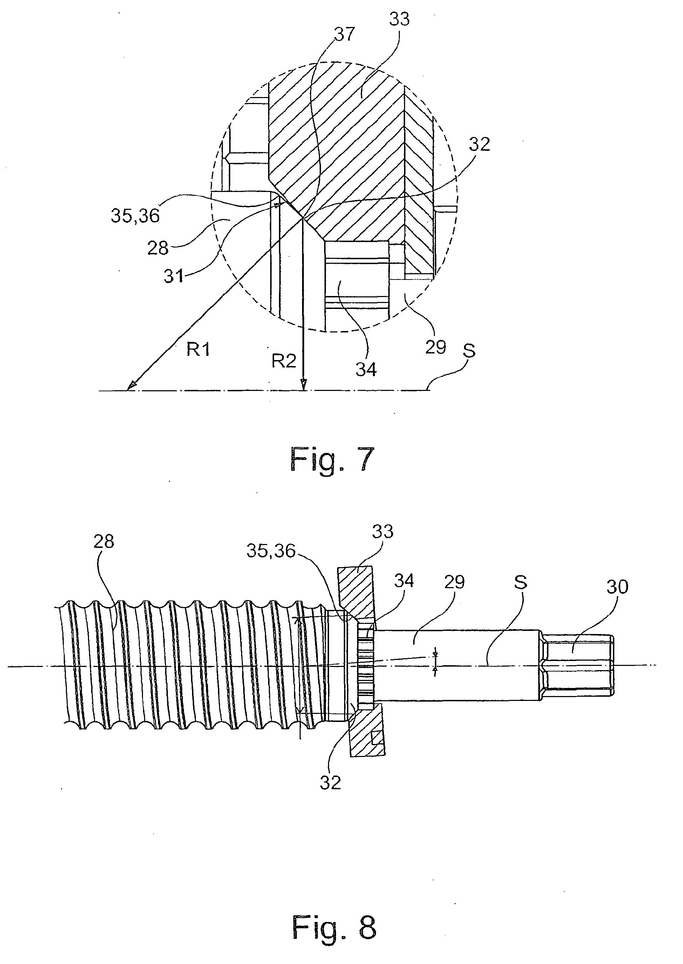

Figur 7 zeigt eine Ausschnittsvergrößerung des Kugelgewindetriebes 24 und des Axiallagers 25. Die Gewindespindel 28 ist im Übergang auf den radial abgesetzten Spindelabschnitt 29 mit einer Schulter 31 versehen. Diese Schulter 31 weist eine mit einem Krümmungsradius konvex geformte Lagerfläche 32 auf. Eine Stützscheibe 33 des Axiallagers 25 ist über eine Verzahnung 34 drehfest, aber taumelfähig auf der Gewindespindel 28 angeordnet. Die Stützscheibe 33 ist ein ihrer der ersten Lagerfläche 32 zugewandten Stirnseite mit einer konischen Öffnung 35 versehen, die eine zweite Lagerfläche 36 bildet.

In Figur 7 ist die Spindelachse S angedeutet. Der Krümmungsradius R1 der ersten Lagerfläche 32 fällt auf die Spindelachse S. Die beiden Lagerflächen 32,36 berühren einander entlang einer ringförmigen Kontaktbahn 37, deren Mittelpunkt ebenfalls auf der Spindelachse S liegt. Diese ringförmige Kontaktbahn 37 hat einen Radius R2. Der Figur 7 ist zu entnehmen, dass die beiden Radien R1 und R2 auf der Spindelachse S beabstandet zueinander angeordnet sind. Der Radius R1 ist größer als der Radius R2, wobei ein aus dem Verhältnis des Radius R1 zu dem Radius R2 gebildete Quotient erfindungsgemäß Werte zwischen 1,4 und 1,6 einschließlich dieser Werte annimmt. Ein mit dem Krümmungsradius R1 gezogener Kreis liegt in der Blattebene. Ein mit dem Krümmungsradius R2 gezogener Kreis liegt in einer quer zur Blattebene angeordneten Ebene.

Figur 8 zeigt die Situation, in der aufgrund einer elastischen Verformung der Bremszange 3 oder des gehäuseartigen Abschnitts 6 die Stützscheibe 33 gegenüber der Gewindespindel in 28 um etwa 0,5° gekippt ist, wobei in der Darstellung diese Verkippung überhöht dargestellt ist. Eine unerwünschte Belastung des Axiallagers 25 mit einem Biegemoment ist demzufolge vermieden. Die Stützscheibe 33 ist demzufolge taumelfähig auf der Gewindespindel 28 angeordnet; sie kann um quer zur Spindelachse gelegene Achsen kippen, und Drehmomente zur Übertragung von Drehmomenten zwischen Stützscheibe 33 und Gewindespindel 28 übernehmen.

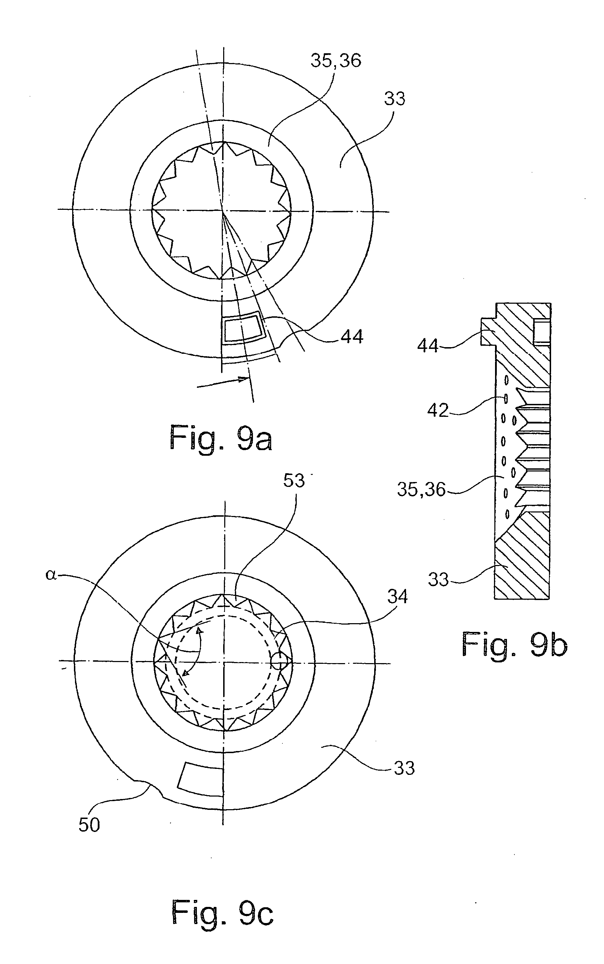

Die Figuren 9a, 9b, 9c zeigen die Stützscheibe 33 in zwei Ansichten und im Längsschnitt. In Figur 9b sind in der Wandung der konischen Öffnung 35 Taschen 42 zur Aufnahme von Schmierstoff vorgesehen. In der Kontaktbahn 37 ist somit ein Schmierfilm aufgebaut, der ein leichtgängiges Verkippen der beiden Lagerflächen 33, 36 unterstützt.

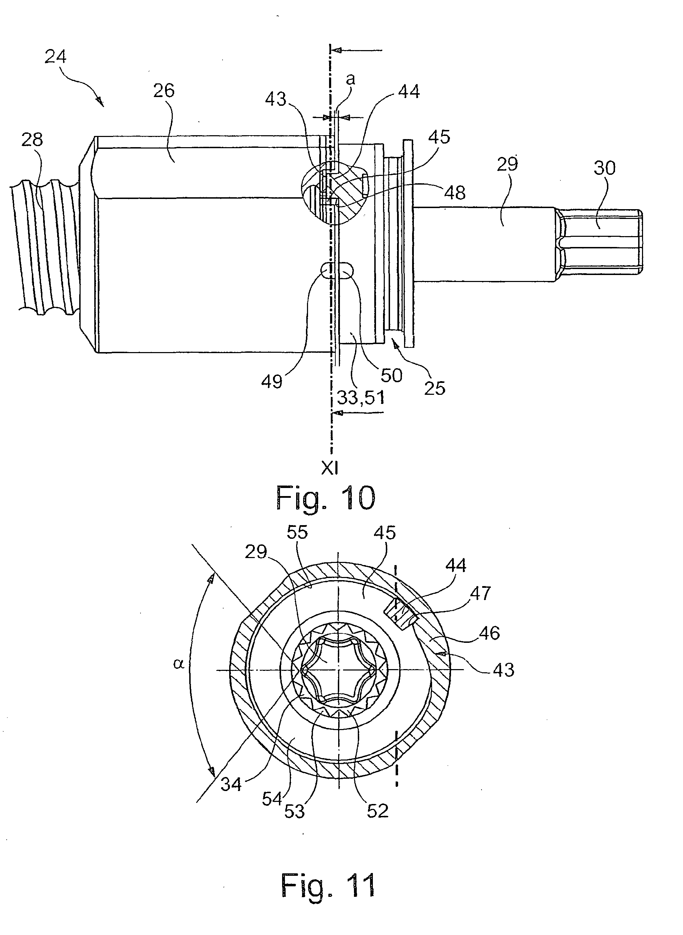

Figur 10 zeigt den erfindungsgemäßen Kugelgewindetrieb mit teilweise gebrochen dargestellter Gewindemutter 26 und Stützscheibe 33. Hier ist ein umfangsseitiger Anschlag 43 für die Gewindemutter 26 zu erkennen, der nachstehend näher beschrieben wird.

Der Figur 10 kann entnommen werden, dass die Stützscheibe 33 an ihrer der Gewindemutter 26 zugewandten Stirnseite mit einem axialen Vorsprung 44 versehen ist. Dieser axiale Vorsprung 44 greift in eine Ausnehmung 45 der Gewindemutter 26 ein.

Figur 11 zeigt deutlich die Ausnehmung 45, die sich in Umfangsrichtung über einen größeren Umfangsabschnitt erstreckt. In der einen Umfangsrichtung ist die Ausnehmung 45 begrenzt durch einen einstückig an der Gewindemutter 26 angeformten Zahn 46, der radial einwärts gerichtet ist. Der Figur 11 ist ferner zu entnehmen, dass der Vorsprung 44 in einer Anschlagposition angeordnet ist, in der er an einer ersten Anschlagfläche 47 des Zahns 46 anschlägt.

In axialer Richtung ist die Ausnehmung 45 begrenzt durch einen einstückig mit der Gewindemutter 26 ausgebildeten Boden 54. In radialer Richtung ist die Ausnehmung begrenzt durch eine einstückig mit der Gewindemutter 26 ausgebildete Umfangswandung 55.

Dieser Anschlag 43 verhindert, dass die Gewindemutter 26 axial mit der Stützscheibe 33 verspannt werden kann. Denn bevor einander zugewandte Stirnflächen der Gewindemutter 26 und der Stützscheibe 33 miteinander in Kontakt kommen, schlägt der Vorsprung 44 gegen die erste Anschlagfläche 47 des Zahns 46 an.

Die Ausnehmung 45 erstreckt sich über einen Umfangswinkel von mehr als 180°, so dass der Vorsprung 44 unter schraubender Relativdrehung zu der Gewindemutter 26 in diese Ausnehmung 45 eintaucht.

Der Umfangsanschlag 43 ist so eingestellt, dass in der Anschlagsituation zwischen der Gewindemutter 26 und der Stützscheibe 33 ein Mindestabstand a eingehalten ist, so dass jedenfalls ein axiales Verspannen zwischen Gewindemutter 26 und Gewindespindel 28 verhindert ist. In der Figur 10 ist der Mindestabstand a eingezeichnet, der zwischen den beiden einander zugewandten Stirnflächen der Gewindemutter 26 und der Spindelscheibe 33 vorgesehen ist..

Insbesondere der Figur 10 kann entnommen werden, dass der Vorsprung 44 und die erste Anschlagfläche 47 in axialer Richtung einander überdecken. Diese axiale Überdeckung ist einerseits kleiner als die gesamte axiale Erstreckung des axialen Vorsprungs 44, so dass auf jeden Fall der weiter oben erwähnte Mindestabstand a gesichert ist. Andererseits ist diese axiale Überdeckung größer als die axiale Erstreckung des Vorsprungs 44 abzüglich des axialen Mindestabstandes a zwischen dem Anschlag 43 und der Gewindemutter 26. Ferner ist die axiale Erstreckung des Vorsprungs 24 höchstens so groß wie die Steigung des Kugelgewindetriebes, um die auftretenden Biegemomente an dem Vorsprung 44 im Augenblick des Anschlagens gegen die erste Anschlagfläche 47 klein zu halten.

Um zu verhindern, dass in der Anschlagsituation radiale Kräfte aufgrund des Anschlagens erzeugt werden, sind eine an dem Vorsprung 44 gebildete zweite Anschlagfläche 48 und die zugehörige erste Anschlagfläche 47 des Zahns 46 in der Anschlagposition in einer gemeinsamen, die Spindelachse enthaltenden Ebene angeordnet.

Die im Ausführungsbeispiel an der Gewindemutter 26 stirnseitig ausgebildete Ausnehmung 45 erstreckt sich in Umfangsrichtung über einen Winkel, der gebildet ist aus einem Quotienten des Verhältnisses aus der oben erwähnten axialen Überdeckung zu der Steigung der Gewindespindel, multipliziert mit 360°, wobei zur Ermittlung des Winkels die axiale Überdeckung und die Steigung der Gewindespindel beide mit der gleichen Längeneinheit bezeichnet sind.

Der Figur 10 kann ferner entnommen werden, dass an der Gewindemutter 26 und an der Stützscheibe 33 jeweils eine optische Markierung 49,50 ausgebildet sind. Diese Markierungen 49,50 sind vorliegend kleine, am Außenumfang eingebrachte Mulden. Diese Markierungen 49 50 ermöglichen eine einfache Montage des Kugelgewindetriebes 24, was nachstehend näher erläutert wird.

Für ein einwandfreies Funktionieren des Anschlags 43 ist die Drehlagenposition der Stützscheibe 33 gegenüber der Gewindespindel 28 von Bedeutung. Wenn beispielsweise im Ausführungsbeispiel die Stützscheibe 33 entgegen dem Uhrzeigersinn um 90° um die Gewindespindel herum verdreht angeordnet wäre, könnte die Situation eintreten, dass die Gewindemutter 26 und die Stützscheibe 33 stirnseitig aneinander anschlagen, bevor der Anschlag 43 in Umfangsrichtung wirksamen ist. Demzufolge ist eine einwandfreie Drehlagenposition eines Anschlagteils 51 gegenüber der Gewindespindel 28 von Bedeutung. Im Ausführungsbeispiel ist das Anschlagteil 51 durch die Stützscheibe 33 gebildet.

Der Figur 11 kann entnommen werden, dass die weiter oben bereits erwähnte Verzahnung 34 zwischen der Stützscheibe 33 und dem Spindelabschnitt 29 der Gewindespindel 28 zur Übertragung von Drehmomenten vorgesehen ist. Diese Verzahnung 34 ermöglicht ein Aufsetzen der Stützscheibe 33 auf den Spindelabschnitt 29 in mehreren Drehlagenpositionen. Diese Verzahnung 34 ist vorliegend gebildet durch eine Außenverzahnung 52 am Außenumfang des Spindelabschnitts 29 und durch eine Innenverzahnung 53 am Innenumfang der Stützscheibe 33.

Ein Zahnflankenwinkel α der Außenverzahnung 52, beziehungsweise der Innenverzahnung 53 ist möglichst klein ausgebildet, so dass möglichst steile Zahnflanken gebildet sind. Steile Zahnflanken erleichtert die weiter oben beschriebene Kippbeweglichkeit der Stützscheibe 33 gegenüber der Gewindespindel 28. Je feiner die Verzahnung ausgebildet ist, desto mehr Drehlagenpositionen sind einstellbar.

Für eine Montage des Kugelgewindetriebes 24 kann zunächst die Gewindemutter 26 auf die Gewindespindel 28 soweit aufgeschraubt werden, bis die Gewindemutter 26 ihre vorgesehene Anschlagposition erreicht hat. Nun kann die Stützscheibe 33 auf den Spindelabschnitt 29 aufgesetzt werden, und gegenüber der Gewindespindel 28 und der Gewindemutter 26 soweit verdreht werden, bis die beiden Markierungen 49,50 miteinander fluchtend angeordnet sind. Nun kann die Stützscheibe 33 axial weiter in Richtung auf die Gewindemutter 26 geschoben werden, wobei die Innenverzahnung 53 in die Außenverzahnung 52 eingreift. Es ist auch denkbar, beispielsweise an der Stützscheibe 33 zwei Markierungen vorzusehen, zwischen denen die Markierung 49 der Gewindemutter 26 anzuordnen ist. Auf diese Weise ist ein Winkel definiert, innerhalb dessen eine zulässige Drehlagenposition für die Stützscheibe 33 gegenüber der Gewindespindel 28 gegeben ist.

Die hier skizzierte Montage kann automatisiert erfolgen, wobei die Markierungen 49,50 über geeignete Messaufnehmer erkannt werden können. Sobald diese Markierungen 49,50 miteinander fluchtend angeordnet sind, kann über eine geeignete Steuerung der nächste Montageschritt ausgelöst und die Stützscheibe 33 mit ihrer Innenverzahnung 53 auf die Außenverzahnung 52 des Spindelabschnitt 29 axial aufgeschoben werden.

Der Kugelgewindetrieb kann ohne Kugelrückführung ausgebildet sein. Das bedeutet, dass die Kugeln in einem endlichen Kugelkanal angeordnet sind und lediglich zwischen dessen Enden hin und her wälzen können. Im Ausführungsbeispiel kann eine Schraubendruckfeder in den Kugelkanal eingesetzt sein, deren eines Ende an dem Zahn 46 abgestützt ist, und deren anderes Ende gegen die letzte Kugel angefedert ist. Bei lastfreiem Kugelgewindetrieb können alle Kugeln unter Einwirkung einer Federkraft der Schraubendruckfeder in Richtung auf das Ende des Kugelkanals gefedert werden. Alternativ kann auch ein Kugelgewindetrieb in bekannter Weise mit Kugelrückführung eingesetzt werden: die Kugeln wälzen in endlosen Kugelkanälen endlos um. Der Kugelkanal ist gebildet aus einem Lastabschnitt, in dem die Kugeln unter Last an Kugelrillen der Gewindemutter und der Gewindespindel anwälzen, sowie einem Rückführungsabschnitt, in dem die Kugeln von einem Ende zu einem Anfang des Lastabschnitts rückgeführt werden. Der Rückführabschnitt kann in bekannter Weise durch ein Umlenkrohr am Außenumfang der Gewindemutter gebildet sein, aber auch durch Umlenkstücke, die in der Wandung der Gewindemutter eingesetzt sind. Diese Umlenkstücke verbinden ein Ende einer gemeinsamen Windung des Lastabschnitts mit dessen Anfang.

Im Ausführungsbeispiel ist die Gewindemutter 26 mit der Ausnehmung 45 und dem Zahn 46 aus einem Einsatzstahl halbwarm geformt. Die Halbwarmumformung wird in einem Temperaturbereich von 750 °C bis 950 °C durchgeführt. Für die Halbwarmumformung können vorgefertigte Rohteile induktiv erwärmt und auf zum Teil mehrstufigen Pressen umgeformt werden.

Die Kugelrille ist vorliegend spangebend durch Drehen hergestellt. Alternativ oder auch zusätzlich kann die Kugelrille mittels Gewindefurchen hergestellt sein. Die fertig geformte Gewindemutter wird anschließend einsatzgehärtet.

Die Stützscheibe 33 ist ebenfalls spanlos, insbesondere im halbwarmen Umformverfahren hergestellt. Insbesondere der Figur 9 kann entnommen werden, dass der axiale Vorsprung etwa halb durchgestellt ist. Das bedeutet, Material der Stützscheibe 33 ist aus dem scheibenförmigen Teil herausgeformt, wobei an der Stützscheibe 33 an ihrer von dem Vorsprung abgewandten Stirnseite mit einer Aussparung versehen ist.

### Bezugszahlenliste

- 1: Bremseinrichtung
- 2: Bremsscheibe
- 3: Bremszange
- 4: Bremsbelag
- 5: Bremsbelag
- 6: Gehäuseartiger Abschnitt
- 7: Kugelgewindetrieb
- 8: Gewindespindel
- 9: Kugeln
- 10: Gewindemutter
- 11: Kugelrückführelement
- 12: Radiallager
- 13: Axiallager
- 14: Kolben
- 15: Konische Führungsfläche
- 16: Führungsfläche
- 17: Wand
- 18: Erste Lagerscheibe
- 19: Zweite Lagerscheibe
- 20: Nadelwälzkörper
- 21: Axialer Ansatz
- 22: zweite Lagerfläche
- 23: erste Lagerfläche
- 24: Kugelgewindetrieb
- 25: Axiallager
- 26: Gewindemutter
- 27: Kugel
- 28: Gewindespindel
- 29: Spindelabschnitt
- 30: Mehrkant
- 31: Schulter
- 32: erste Lagerfläche
- 33: Stützscheibe
- 34: Verzahnung
- 35: konische Öffnung
- 36: zweite Lagerfläche
- 37: Kontaktbahn
- 38: Axialwälzlager
- 39: Rolle
- 40: Lagerscheibe
- 41: Lagerscheibe
- 42: Tasche
- 43: Anschlag
- 44: Vorsprung
- 45: Ausnehmung
- 46: Zahn
- 47: erste Anschlagfläche
- 48: zweite Anschlagfläche
- 49: Markierung
- 50: Markierung
- 51: Anschlagteil
- 52: Außenverzahnung
- 53: Innenverzahnung
- 54: Boden
- 55: Umfangswandung
- A: gemeinsame Achse
- A₁: Achse der Bremszange
- A₂: Achse des Kugelgewindetriebs
- A₃: Achse des Kolbens
- R1: Krümmungsradius der ersten Lagerfläche
- R2: Radius der Kontaktbahn
- S: Spindelachse

## Patentansprüche

1. Kugelgewindetrieb (7, 24), mit einer über Kugeln (9, 27) an einer Gewindemutter (10, 26) wälzgelagerten Gewindespindel, (8, 28), die an einem Axiallager (13, 25) abgestützt ist, **dadurch gekennzeichnet, dass** die Gewindespindel (8, 28) mit ihrer ersten, mit einem Krümmungsradius (R1) konvex geformten Lagerfläche (18, 23) an einer konisch ausgebildeten zweiten Lagerfläche (19, 22) axial abgestützt ist, wobei die erste Lagerfläche (18,23) und die zweite Lagerfläche (19, 22) entlang einer Kontaktbahn (37) einander berühren, wobei ein aus dem Verhältnis des Krümmungsradius (R1) zu dem Radius (R2) der Kontaktbahn (37) gebildeter Quotient Werte zwischen 1,2 und 2,4 einschließlich dieser Werte annimmt.

2. Kugelgewindetrieb (7, 24) nach Anspruch 1, bei dem der Quotient Werte zwischen 1,4 und 1,6 einschließlich dieser Werte annimmt.

3. Kugelgewindetrieb (7, 24) nach Anspruch 1, bei dem ein Mittelpunkt des Krümmungsradius (R1) auf der Längsachse (S) der Gewindespindel (8, 28) liegt.

4. Kugelgewindetrieb (7, 24) nach Anspruch 1, bei dem wenigstens eine der beiden ersten und zweiten Lagerflächen (22, 23) mit Taschen (42) zur Aufnahme von Schmiermittel versehen ist.

5. Kugelgewindetrieb (24) nach Anspruch 1, bei dem das Axiallager (13, 25) eine mit der Gewindespindel (8, 28) in den Drehrichtungen formschlüssig verbundene Stützscheibe (33) aufweist, an deren der Gewindemutter (26) zugewandten Seite die zweite Lagerfläche (36) ausgebildet ist.

6. Kugelgewindetrieb (24) nach Anspruch 5, bei dem die Stützscheibe (33) taumelfähig auf der Gewindespindel (28) angeordnet ist.

7. Kugelgewindetrieb (24) nach Anspruch 5, bei dem die Stützscheibe (33) an ihrer von der Gewindemutter (26) abgewandten Seite mit einer Axiallagerfläche versehen ist, die unmittelbar an der Stützscheibe (33) oder an einer an die Stützscheibe (33) anschließenden Lagerscheibe (40, 41) ausgebildet ist.

## Claims

1. Ball screw (7, 24), having a threaded spindle (8, 28) which is mounted in a rolling fashion by means of balls (9, 27) on a threaded nut (10, 26) and which is supported on an axial bearing (13, 25), **characterized in that** the threaded spindle (8, 28) is axially supported with its first bearing surface (18, 23), which is convexly shaped with a radius of curvature (R1), on a conically designed second bearing surface (19, 22), wherein the first bearing surface (18, 23) and the second bearing surface (19, 22) make contact with one another along a contact path (37), wherein a quotient formed from the ratio of the radius of curvature (R1) to the radius (R2) of the contact path (37) assumes values of between 1.2 and 2.4 inclusive.

2. Ball screw (7, 24) according to Claim 1, in which the quotient assumes values of between 1.4 and 1.6 inclusive.

3. Ball screw (7, 24) according to Claim 1, in which a central point of the radius of curvature (R1) lies on the longitudinal axis (5) of the threaded spindle (8, 28).

4. Ball screw (7, 24) according to Claim 1, in which at least one of the two first and second bearing surfaces (22, 23) is provided with pockets (42) for receiving lubricant.

5. Ball screw (24) according to Claim 1, in which the axial bearing (13, 25) has a support disk (33) which is connected to the threaded spindle (8, 28) in a positively locking manner in the rotational directions, the second bearing surface (36) being formed on that side of said support disk which faces toward the threaded nut (26).

6. Ball screw (24) according to Claim 5, in which the support disk (33) is arranged, so as to be capable of performing a wobbling motion, on the threaded spindle (28).

7. Ball screw (24) according to Claim 5, in which the support disk (33) is provided, on its side facing away from the threaded nut (26), with an axial bearing surface which is formed directly on the support disk (33) or on a bearing disk (40, 41) which adjoins the support disk (33).

## Revendications

1. Vis d'entraînement à billes (7, 24), comprenant une tige filetée (8, 28) supportée sur palier à roulement par le biais de billes (9, 27) sur un écrou fileté (10, 26), ladite tige filetée étant supportée sur un palier axial (13, 25), **caractérisée en ce que** la tige filetée (8, 28) est supportée axialement par sa première face de palier (18, 23) de forme convexe, avec un rayon de courbure (R1), sur une deuxième face de palier (19, 22) réalisée sous forme conique, la première face de palier (18, 23) et la deuxième face de palier (19, 22) étant en contact l'une avec l'autre le long d'une piste de contact (37), un quotient formé du rapport du rayon de courbure (R1) sur le rayon (R2) de la piste de contact (37) prenant des valeurs comprises entre 1,2 et 2,4, ces valeurs incluses.

2. Vis d'entraînement à billes (7, 24) selon la revendication 1, dans laquelle le quotient prend des valeurs comprises entre 1,4 et 1,6, ces valeurs incluses.

3. Vis d'entraînement à billes (7, 24) selon la revendication 1, dans laquelle un centre du rayon de courbure (R1) s'applique sur l'axe longitudinal (S) de la tige filetée (8, 28).

4. Vis d'entraînement à billes (7, 24) selon la revendication 1, dans laquelle au moins l'une des deux première et deuxième faces de palier (22, 23) est pourvue de cavités (42) pour recevoir un lubrifiant.

5. Vis d'entraînement à billes (24) selon la revendication 1, dans laquelle le palier axial (13, 25) présente un disque de support (33) connecté à la tige filetée (8, 28) par engagement positif dans les directions de rotation, sur le côté duquel, tourné vers l'écrou fileté (26), est réalisée la deuxième face de palier (36).

6. Vis d'entraînement à billes (24) selon la revendication 5, dans laquelle le disque de support (33) est disposé de manière à pouvoir effectuer un mouvement d'oscillation sur la tige filetée (28).

7. Vis d'entraînement à billes (24) selon la revendication 5, dans laquelle le disque de support (33) est pourvue, sur son côté opposé à l'écrou fileté (26), d'une face de palier axiale qui est réalisée directement sur le disque de support (33) ou sur un disque de palier (40, 41) se raccordant au disque de support (33).
